# EUROPÄISCHE PATENTSCHRIFT

(11) **EP 1 627 771 B1**
(45) Veröffentlichungstag und Bekanntmachung des Hinweises auf die Patenterteilung: **15.10.2008**
(21) Anmeldenummer: 04019659.4
(22) Anmeldetag: 19.08.2004
(51) Int. Cl.: B60P 1/44

(54) **Hubladebühne mit querverschiebbarem Verbindungsrohr**
Loading platform with transversaly shiftable connection tube
Hayon élévateur avec un tube de liaison déplacable transversalement

(43) Veröffentlichungstag der Anmeldung: 22.02.2006
(73) Patentinhaber: Bär, Gerd, 74078 Heilbronn (DE)
(72) Erfinder: Bär, Gerd, 74078 Heilbronn (DE)
(74) Vertreter: Dreiss, Fuhlendorf, Steimle & Becker

(56) Entgegenhaltungen:
- EP-A- 1 106 431
- EP-A- 1 221 399
- DE-A- 3 129 789
- DE-A- 19 613 768
- DE-U- 29 904 881

## Beschreibung

Die vorliegende Erfindung betrifft eine Hubladebühne gemäß Oberbegriff des Patentanspruches 1.

Eine derartige Hubladebühne ist durch die EP-A-1 221 399 bekannt geworden.

Diese bekannte Hubladebühne ist eine so genannte Zweizylinder-Hubladebühne mit einem im Wesentlichen parallelogrammförmigen Hubwerk für eine Plattform. Das Hubwerk weist zwei horizontal beabstandete Tragarme zum Tragen der Plattform, einen dem einen, ersten Tragarm zugeordneten Parallelzylinder für das Verschwenken der Plattform von ihrer vertikalen Fahrtstellung in ihre horizontale Arbeitsstellung und umgekehrt, einen dem anderen, zweiten Tragarm zugeordneten Hubzylinder zum Heben und Senken der Plattform in ihrer Arbeitsstellung sowie ein rundes Verbindungsrohr zur elastischen Bewegungskopplung von Hubzylinder und erstem Tragarm auf. Das Verbindungsrohr überträgt als ein Torsions- und Biegeelement die Kräfte von der einen auf die andere Hubwerkseite und dient gleichzeitig als Unterfahrschutz. Das Verbindungsrohr ist auf beiden Hubwerksseiten jeweils in Klemmschellen formschlüssig gehalten, die an Tragelemente der Tragarme angeschweißt sind.

Da solche Zweizylinder-Hubladebühnen direkt am Fahrgestellrahmen befestigt werden, werden sowohl der Querabstand der Tragelemente und ihre Querposition am Verbindungsrohr als auch die Länge des Verbindungsrohrs durch die Rahmenbreite bestimmt. Bei unterschiedlich breiten Fahrgestellrahmen müssen daher die Tragelemente an jeweils unterschiedlichen Querpositionen am Verbindungsrohr angeschweißt werden, was zu vielen Varianten führt und die Fertigung sehr aufwändig macht. Außerdem bedeuten diese vielen Varianten eine eigentlich unnötige Schwierigkeit in der Verteilungslogistik und am Lager des Betriebes, welcher die Hubladebühnen an das Fahrzeug verbaut.

Es ist die Aufgabe der vorliegenden Erfindung, bei einer Hubladebühne der eingangs genannten Art die Befestigung des Verbindungsrohrs an den Tragelementen der Tragarme weiter zu verbessern.

Diese Aufgabe wird erfindungsgemäß dadurch gelöst, dass die Öffnungen der Tragelemente eine Innenverzahnung und das Verbindungsrohr zumindest in seinem Querverschiebbereich, vorzugsweise auf seiner gesamten Länge, eine Außenverzahnung aufweist.

Erfindungsgemäß greifen die Innenverzahnung und die Außenverzahnung im festgestellten Zustand ineinander. Die hierbei auftretenden Toleranzen zwischen den Innen- und Außenverzahnungen können durch eine radiale Klemmung eliminiert werden. Dies ergibt eine spielfreie, stramm sitzende Verbindung. Die Gestaltung der Verzahnung bietet nach dem Festziehen eine formschlüssige, spielfreie, hochbelastbare Verbindung.

Der gewünschte Querabstand wird durch Verschieben der Tragelemente auf dem Verbindungsrohr eingestellt, und in dieser eingestellten Position werden Verbindungsrohr und Tragelemente zueinander lösbar festgestellt. Die erfindungsgemäße Hubladebühne kann so alle breitenrelevanten Varianten von Hubwerken abdecken. Damit kann der Lagerbestand von Baugruppen und fertigen Hubwerken in der Produktionsfirma um mehr als 50 % reduziert werden. Der Montagebetrieb hat immer die richtige Hubladebühne am Lager und kann schnell liefern. Der Lagerbestand hier kann um bis zu 75 % niedriger sein. Da das Verbindungsrohr erst am Fahrzeug mit den Hub- und Tragarmen verbunden wird, entsteht bei der Montage zwangsläufig der für das jeweilige Fahrzeug erforderliche Tragarmmittenabstand.

Besonders bevorzugt sind das Verbindungsrohr und/oder die Tragelemente aus Aluminium, vorzugsweise aus einem Aluminiumstrangpressprofil, hergestellt. Die Herstellkosten dieser Aluminium-Teile sind geringer als bei der herkömmlichen geschweißten Variante aus Stahl, da der nachträgliche Oberflächenschutz, wie Grundierung, Lackierung, kathodische Tauchlackierung oder Feuerverzinkung, komplett entfällt. Der Oberflächenschutz eines Aluminiumprofils erfolgt in wirtschaftlicher Weise durch Eloxieren. Die Eloxal-Außenhaut sowohl des Verbindungsrohrs als auch der Tragelemente ist mechanisch hoch belastbar, so dass weder beim Transport noch bei der Montage besondere Sorgfalt notwendig ist. Das Verbindungsrohr kann bereits in seiner Herstellungslänge eloxiert werden. Die Tragelemente werden nach der spanenden Bearbeitung eloxiert. Bei der Produktionsfirma entsteht kein Füge- oder Montagevorgang. Die Teile müssen dem Hubladebühnenbausatz einfach beigepackt werden. Das Eigengewicht der Aluminium-Teile beträgt ca. 70 % des entsprechenden herkömmlichen Unterfahrschutzes aus Stahl, entspricht ca. 6 kg bei einer kleinen Hubladebühne von 750 kg Tragkraft. Dies ist insbesondere bei den kleinen Nutzfahrzeugen ein großer Vorteil.

Im einfachsten Fall sind die Öffnungen der Tragelemente jeweils als Klemmöffnung ausgebildet, die mittels einer Klemmschraube verstellbar ist.

Vorzugsweise ist die Hubladebühne als Zweizylinder-Hubladebühne mit einem dem einen, ersten Tragarm zugeordneten Parallelzylinder für das Verschwenken der Plattform von ihrer vertikalen Fahrtstellung in ihre horizontale Arbeitsstellung und umgekehrt sowie mit einem dem anderen, zweiten Tragarm zugeordneten Hubzylinder ausgebildet, wobei das Verbindungsrohr als ein Torsions- und Biegeelement die Kräfte von der einen auf die andere Hubwerkseite überträgt.

Besonders bevorzugt bildet das Verbindungsrohr gleichzeitig einen Unterfahrschutz. Unterfahrschutze haben, insbesondere wenn sie wie bei Hubladebühnen beweglich sind, oft Bodenkontakt, außerdem sind sie als "Stoßstange" da. Hierbei wird bei herkömmlichen Unterfahrschutzen die Oberfläche beschädigt, so dass sich an dieser Stelle Rost bildet. Ein erfindungsgemäßes Unterfahrschutzrohr aus eloxiertem Aluminium hingegen sieht - gewaltsame Verformungen ausgenommen - bis zur letzten Stunde des Hubladebühnen- bzw. Fahrzeuglebens wie neu aus. Dies ist insbesondere bei Lebensmittel- und Kühlfahrzeugen ein wichtiger Mehrwertaspekt.

Weitere vorteilhafte Ausgestaltungen der Erfindung sind Gegenstand der Unteransprüche.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erfindungsgemäße Zweizylinder-Hubladebühne ohne Plattform; und
- Fig. 2: ein Tragelement der in Fig. 1 gezeigten Zweizylinder-Hubladebühne.

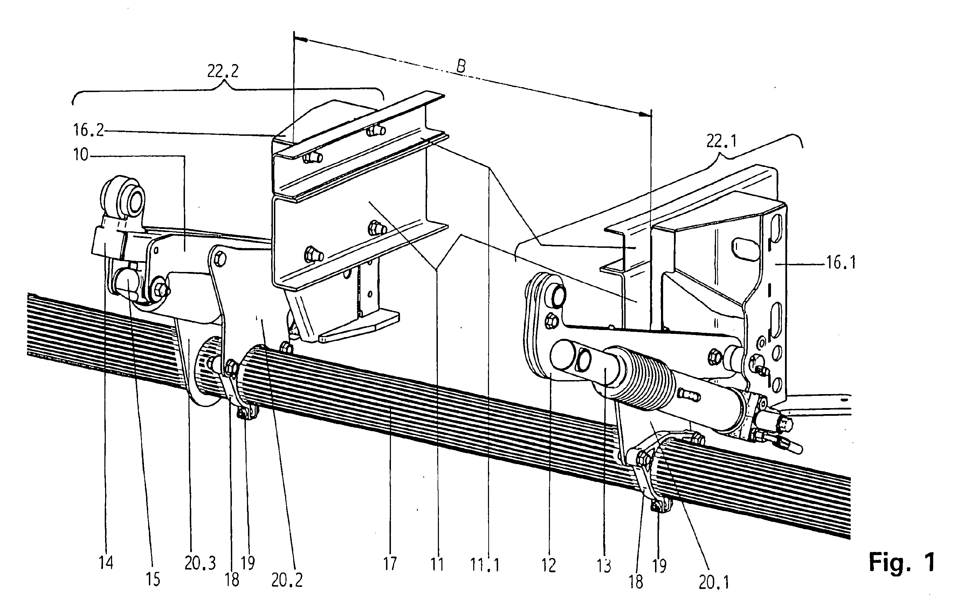

Die in **Fig.1** gezeigte Zweizylinder-Hubladebühne **1** umfasst ein im Wesentlichen parallelogrammförmiges Hubwerk für eine Plattform (nicht gezeigt) auf. Das Hubwerk weist zwei horizontal beabstandete Tragarme **12, 14** zum Tragen der Plattform, einen dem einen, ersten Tragarm **12** zugeordneten Parallelzylinder **13** für das Verschwenken der Plattform von ihrer vertikalen Fahrtstellung in ihre horizontale Arbeitsstellung und umgekehrt, einen unterhalb des anderen, zweiten Tragarms **14** angeordneten Hubzylinder **15** zum Heben und Senken der Plattform in ihrer Arbeitsstellung sowie ein Verbindungsrohr (Torsionsrohr) **17** zur Bewegungskopplung von Hubzylinder 15 und erstem Tragarm 12 auf. Das Verbindungsrohr 17 bildet gleichzeitig einen Unterfahrschutz. Der Hubzylinder 15 greift an einem Hubzylinderhebel 10 an und bildet mit diesem ein Kräftedreieck, wobei der Hubzylinderhebel 10 über ein Federmittel (nicht gezeigt) mit dem zweiten Tragarm 14 elastisch in Hubrichtung bewegungsgekoppelt ist. Der Hubzylinderhebel 10 ist entweder um die Drehachse der Tragarme 12, 14 drehbar gelagert oder in radialem Abstand zu dieser Drehachse am zweiten Tragarm 14 drehbar gelagert. Die Plattform ist von den beiden Tragarmen 12, 14 und dem Parallelzylinder 13 getragen. Die in Fig. 1 linke Seite wird als Hubwerksteil **22.2** und die rechte Seite als Tragwerksteil **22.1** bezeichnet.

Bezüglich der genauen Funktionsweise wird auf die EP 03 017 414.8 des Anmelders verwiesen.

Das beschriebene Hubwerk ist über zwei Flanschkonsolen **16.1, 16.2** bündig anliegend mit dem abgebrochen dargestellten Fahrgestellrahmen **11** und dem darüber liegenden Montagerahmen **11.1** durch Schrauben verbunden. Der horizontale Abstand zwischen den beiden Rahmenteilen wird als Rahmenbreite **B** bezeichnet, die von Fahrzeugtyp zu Fahrzeugtyp und/oder Fabrikat variiert. Bei Fahrgestellen mit Hutprofilrahmen liegen noch Adapterteile zwischen dem Fahrgestellrahmen 11 oder Montagerahmen 11.1 und der Flanschkonsole 16.1, 16.2, welche die tatsächliche Rahmenbreite der Flanschkonsolen bestimmen.

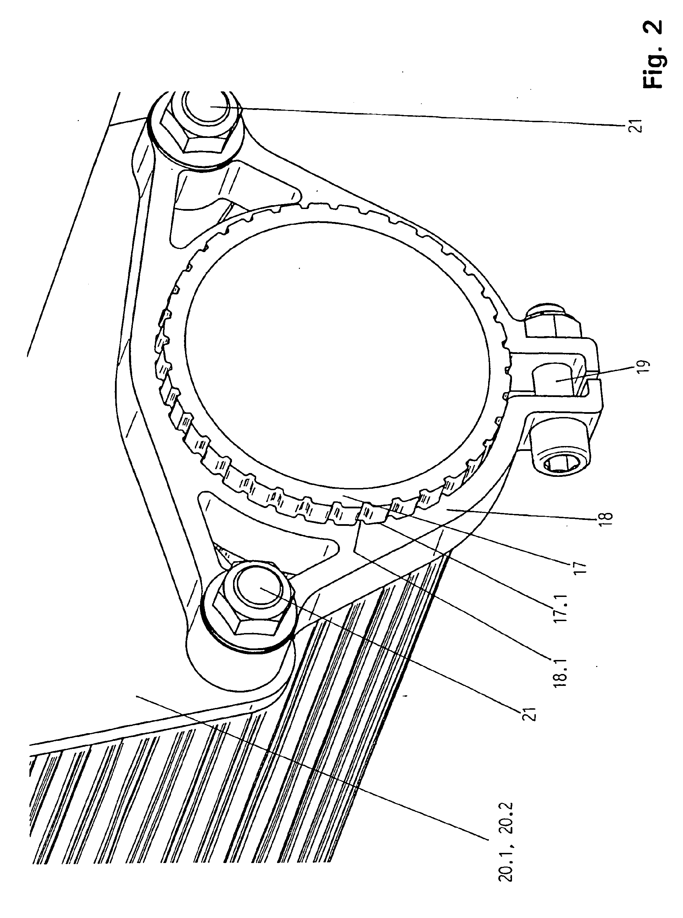

Das Torsionsprofil 17 ist jeweils in Klemmöffnungen **18.1** (Fig. 2) zweier Tragelementen (Klemmplatten) 18 gefasst, die wiederum über Schrauben **21** an Adapterplatten **20.1, 20.2** befestigt sind. Die in Fig. 1 rechte Adapterplatte 20.1 ist am ersten Tragarm 12 und die linke Adapterplatte 20.2 am Hubzylinderhebel 19 angeschraubt. Die Klemmplatten 18 können direkt mit den entsprechenden Hub- und Tragarmen verbunden sein. Geliefert wird die komplette Hubladebühne 1 in den Baugruppen Tragwerksteil 22.1, Hubwerksteil 22.2, Torsionsprofil 17 und Klemmplatten 18 sowie der nicht dargestellten Plattform. Das Torsionsprofil 17 und die Klemmplatten 18 sind jeweils aus einem Aluminiumstrangpressprofil hergestellt.

Fig. **2** zeigt die Klemmplatte 18 mit ihrer Schraubverbindung 21 zu den Adapterplatten 20.1 bzw. 20.2. Zur besseren Erkennung wurde das Torsionsprofil 17 kurz vor der Klemmplatte 18 abgeschnitten. Das Torsionsprofil 17 hat eine Außenverzahnung **17.1**, wobei die äußere Begrenzungslinie der Zähne eine Kreisform entsprechend dem Außendurchmesser des Torsionsprofils 17 bildet. Die Außenverzahnung 17.1 hat nach dem Prinzip einer Vielkeilwelle eine für die Kräfteübertragung und die Optik ausgewählte Verzahnung. Die Öffnung 18.1 der Klemmplatte 18 hat eine der Außenverzahnung 17.1 entsprechende Innenverzahnung. Die Zahnform und der Durchmesser sind so gestaltet, dass ohne Anzug der Klemmschraube **19** das Torsionsprofil 17 und die Klemmplatten relativ zueinander verschoben werden können. Die Innenverzahnung ist weiter so gestaltet, dass diese über ca. zwei Drittel des Umfangs vorhanden ist und sich der unverzahnte Umfang links und rechts der Sechs-Uhr-Position befindet.

Bei der Montage an das Fahrzeug werden das Tragwerksteil 22.1 und das Hubwerksteil 22.2 jeweils getrennt an die beiden Fahrgestellrahmenseiten montiert. Dadurch entsteht zwangsläufig die für dieses Fahrzeug bestimmte Rahmenbreite. Zur Komplettierung des Hubwerks werden jetzt die Tragelemente 18 mit den Schrauben 21 an die beiden Adapterplatten 20.1 und 20.2 lose angeschraubt. Die zum Festklemmen des Verbindungsprofils in der Öffnung 18.1 vorgesehene Klemmschraube 19 ist lose. Jetzt kann das Verbindungsprofil 17 von links oder rechts durchgeschoben werden. Nach der mittigen Ausrichtung werden die Schrauben 21 und die Klemmschrauben 19 festgezogen. Damit ist das Hubwerk mechanisch komplett. Die Plattform kann eingebaut werden. Die Torsionskräfte werden jetzt sicher von der Hubwerksseite auf die Tragwerksseite übertragen. Die Öffnung der Stabilisierungsplatte **20.3** hat keine Verzahnung, sondern ihr Innendurchmesser entspricht mit entsprechendem Spiel dem Außendurchmesser des Verbindungsprofils 17. Die Stabilisierungsplatte 20.3 dient zur Stabilisierung der Hubwerksseite in sich.

## Patentansprüche

1. Hubladebühne (1) zur Befestigung an Fahrzeugen, umfassend eine Plattform und ein im Wesentlichen parallelogrammförmiges Hubwerk mit zwei horizontal beabstandeten Tragarmen (12, 14) und einem Verbindungsrohr (17) zur Bewegungskopplung der beiden Tragarme (12, 14), wobei das Verbindungsrohr (17) auf beiden Tragarmseiten jeweils eine Queröffnung (18.1) eines Tragelements (18) durchgreift und darin querverschiebbar und durch Formschluss drehfest feststellbar ist,
**dadurch gekennzeichnet,**
**dass** die Öffnungen (18.1) der Tragelemente (18) eine Innenverzahnung und das Verbindungsrohr (17) zumindest in seinem Querverschiebbereich, vorzugsweise auf seiner gesamten Länge, eine Außenverzahnung aufweist.

2. Hubladebühne nach Anspruch 1, **dadurch gekennzeichnet, dass** das Verbindungsrohr (17) und/oder die Tragelemente (18) jeweils aus Aluminium, vorzugsweise aus einem Aluminiumstrangpressprofil, hergestellt sind.

3. Hubladebühne nach einem der vorhergehenden Ansprüche, **dadurch gekennzeichnet, dass** die Öffnungen (18.1) der Tragelemente (18) jeweils als Klemmöffnung ausgebildet sind.

4. Hubladebühne nach einem der vorhergehenden Ansprüche, **dadurch gekennzeichnet, dass** die Hubladebühne als Zweizylinder-Hubladebühne (1) mit einem dem einen, ersten Tragarm (14) zugeordneten Parallelzylinder (13) für das Verschwenken der Plattform von ihrer vertikalen Fahrtstellung in ihre horizontale Arbeitsstellung und umgekehrt sowie mit einem dem anderen, zweiten Tragarm (12) zugeordneten Hubzylinder (15) ausgebildet ist.

5. Hubladebühne nach Anspruch 4, **dadurch gekennzeichnet, dass** das parallelzylinderseitige Tragelement (18) am ersten Tragarm (12) befestigt ist.

6. Hubladebühne nach Anspruch 4 oder 5, **dadurch gekennzeichnet, dass** der Hubzylinder (15) an einem Hubzylinderhebel (10) angreift und mit diesem ein Kräftedreieck bildet, wobei der Hubzylinderhebel (10) mit dem zweiten Tragarm (14) elastisch in Hubrichtung bewegungsgekoppelt ist, und dass das hubzylinderseitige Tragelement (18) am Hubzylinderhebel (10) befestigt ist.

7. Hubladebühne nach einem der vorhergehenden Ansprüche, **dadurch gekennzeichnet, dass** das Verbindungsrohr (17) gleichzeitig einen Unterfahrschutz bildet.

## Claims

1. Loading platform (1) for fixing to vehicles, comprising a platform and a substantially parallelogram-like lifting mechanism having two horizontally spaced loadbearing arms (12, 14) and a connecting tube (17) for coupling the movements of the two loadbearing arms (12, 14), the connecting tube (17) on both loadbearing arm sides in each case reaching through a transverse opening (18.1) in a loadbearing element (18) and being able to be displaced transversely and fixed firmly in the latter by a form fit so as to rotate with it,
**characterized in that** the openings (18.1) in the loadbearing elements (18) have internal toothing and the connecting tube (17) has external toothing, at least in its transversely displaceable region, preferably over its entire length.

2. Loading platform according to Claim 1, **characterized in that** the connecting tube (17) and/or the loadbearing elements (18) are each produced from aluminium, preferably from an extruded aluminium profile.

3. Loading platform according to one of the preceding claims, **characterized in that** the openings (18.1) in the loadbearing elements (18) are each formed as a clamping opening.

4. Loading platform according to one of the preceding claims, **characterized in that** the loading platform is constructed as a two-cylinder loading platform (1) having a parallel cylinder (13) assigned to the one, first loadbearing arm (14), for pivoting the platform from its vertical travelling position into its horizontal operating position and vice versa, and also having a lifting cylinder (15) assigned to the other, second loadbearing arm (12).

5. Loading platform according to Claim 4, **characterized in that** the loadbearing element (18) on the parallel cylinder side is fixed to the first loadbearing arm (12).

6. Loading platform according to Claim 4 or 5, **characterized in that** the lifting cylinder (15) acts on a lifting cylinder lever (10) and forms a force triangle with the latter, the movement of the lifting cylinder lever (10) being coupled to the second loadbearing arm (14) so as to be resilient in the lifting direction, and **in that** the loadbearing element (18) on the lifting cylinder side is fixed to the lifting cylinder lever (10).

7. Loading platform according to one of the preceding claims, **characterized in that** the connecting tube (17) simultaneously forms an underride safeguard.

## Revendications

1. Hayon élévateur (1) destiné à être fixé sur des véhicules, comprenant une plate-forme et un mécanisme de levage essentiellement en forme de parallélogramme avec deux bras porteurs (12, 14) écartés horizontalement et un tube de liaison (17) pour le couplage en mouvement des deux bras porteurs (12, 14), ledit tube de liaison (17) traversant sur les deux côtés des bras porteurs une ouverture transversale respective (18.1) d'un élément porteur (18) et pouvant être immobilisé dans celui-ci solidairement en rotation par liaison à coopération de formes mais capable de déplacement transversalement,
**caractérisé en ce que**
les ouvertures (18.1) des éléments porteurs (18) comportent une denture intérieure, et le tube de liaison (17) comporte une denture extérieure, au moins dans sa plage de déplacement transversal et de préférence sur sa longueur totale.

2. Hayon élévateur selon la revendication 1, **caractérisé en ce que** le tube de liaison (17) et/ou les éléments porteurs (18) sont fabriqués respectivement en aluminium, de préférence à partir d'un profilé extrudé en aluminium.

3. Hayon élévateur selon l'une des revendications précédentes, **caractérisé en ce que** les ouvertures (18.1) des éléments porteurs (18) sont réalisées respectivement sous forme d'ouvertures à coincement.

4. Hayon élévateur selon l'une des revendications précédentes, **caractérisé en ce que** le hayon élévateur est réalisé sous forme de hayon élévateur à deux vérins (1) avec un vérin parallèle (13) associé au premier bras porteur (14) pour faire pivoter la plate-forme depuis sa position verticale en circulation jusque dans sa position de travail horizontal et inversement, et avec un vérin de levage (15) associé au second bras porteur (12).

5. Hayon élévateur selon la revendication 4, **caractérisé en ce que** l'élément porteur (18) du côté du vérin parallèle est fixé sur le premier bras porteur (12).

6. Hayon élévateur selon la revendication 4 ou 5, **caractérisé en ce que** le vérin de levage (15) attaque un levier de vérin (10) et forme avec celui-ci un triangle de forces, et ledit levier de vérin (10) est couplé en mouvement au second bras porteur (14) de manière élastique dans la direction de levage, et **en ce que** l'élément porteur (18) du côté du vérin de levage est fixé sur le levier de vérin (10).

7. Hayon élévateur selon l'une des revendications précédentes, **caractérisé en ce que** le tube de liaison (17) forme simultanément une protection à l'encontre d'une pénétration par le dessous.
